(19) Europäisches Patentamt / European Patent Office / Office européen des brevets

(11) EP 3 077 265 B1

(12) **FASCICULE DE BREVET EUROPEEN**

(45) Date de publication et mention de la délivrance du brevet:
**22.01.2020 Bulletin 2020/04**

(21) Numéro de dépôt: **14824898.2**

(22) Date de dépôt: **02.12.2014**

(51) Int Cl.:
**B61B 12/06** *(2006.01)*

(86) Numéro de dépôt international:
**PCT/FR2014/053137**

(87) Numéro de publication internationale:
**WO 2015/082834 (11.06.2015 Gazette 2015/23)**

(54) **SYSTÈME DE TRANSPORT PAR CÂBLE AÉRIEN, NOTAMMENT UN TÉLÉSIÈGE OU TÉLÉCABINE**

LUFTKABELTRANSPORTSYSTEM, INSBESONDERE FÜR EINEN SESSELLIFT ODER EINE SEILBAHN

AERIAL CABLE TRANSPORT SYSTEM, IN PARTICULAR A CHAIRLIFT OR CABLE CAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2013 FR 1302836**

(43) Date de publication de la demande:
**12.10.2016 Bulletin 2016/41**

(73) Titulaire: **POMA**
**38340 Voreppe (FR)**

(72) Inventeurs:
• MOURET, Gérald
  38340 Voreppe (FR)
• BERTOLAMI, Olivier
  38000 Grenoble (FR)

(74) Mandataire: **Talbot, Alexandre et al**
**Cabinet Hecké**
**28 Cours Jean Jaurès**
**38000 Grenoble (FR)**

(56) Documents cités:
**EP-A1- 1 101 681     EP-A1- 2 067 682**
**EP-A1- 2 647 538**

EP 3 077 265 B1

## Description

## Domaine technique de l'invention

L'invention concerne les systèmes de transport par câble aérien, notamment un télésiège ou télécabine.

## État de la technique

Actuellement, les systèmes de transport par câble aérien comportent une station d'embarquement des personnes dans les véhicules, une station de débarquement des personnes et éventuellement une ou plusieurs stations intermédiaires. Les systèmes peuvent être débrayables ou non, c'est-à-dire que les véhicules sont montés fixes sur le câble aérien tracteur dans le cas d'un système non débrayable, et les véhicules sont montés amovibles sur le câble aérien tracteur dans le cas des systèmes débrayables. En d'autres termes, les véhicules sont reliés mécaniquement en permanence sur le câble aérien tracteur, ou non. Dans les deux cas, lorsque les véhicules quittent la station d'embarquement, ils sont solidaires du câble tracteur qui les mènent jusqu'à la station de débarquement. Entre les deux stations, les véhicules sont dits « en ligne » et cheminent le long d'un trajet défini par le câble tracteur. La plupart des systèmes de transport par câble aérien comportent des pylônes qui permettent d'adapter le trajet des véhicules au relief. Les pylônes sont généralement équipés d'un balancier muni de galets pour guider le câble aérien tracteur. Cependant, il existe des accidents lors du trajet des véhicules en ligne. Par exemple, les véhicules peuvent être bloqués sur un balancier d'un pylône, en déraillant par rapport aux galets, et le câble tracteur peut continuer à être entraîné pour conduire à une collision d'un autre véhicule contre celui qui est bloqué. Par ailleurs, les véhicules peuvent également être bloqués lors de la chute d'un arbre sur le câble aérien tracteur.

On peut citer la demande de brevet français FR 2941206 qui divulgue un dispositif de contrôle du cheminement de véhicules dans une installation de transport par câble comprenant des moyens de détection des véhicules, tels des capteurs inductifs détectant le mors des pinces débrayables des véhicules. Mais ce dispositif de contrôle est adapté pour le cheminement des véhicules au sein d'une station d'embarquement ou de débarquement, il n'est pas adapté pour contrôler la position des véhicules en ligne. En effet, les capteurs inductifs doivent être situés sur des points fixes, tels des pylônes, et le dispositif n'est donc pas adapté pour des systèmes de transport sans pylônes. En outre, les capteurs inductifs situés à l'extérieur sont soumis aux conditions extrêmes et sont plus facilement endommagés. Par ailleurs, les capteurs inductifs ne sont pas adaptés pour des câbles métalliques ayant un revêtement non métallique. On peut citer également le brevet européen EP 2 067 682 A1, qui montre un système de transport par câble faisant usage d'un émetteur radiofréquence placé dans le véhicule et d'un récepteur radiofréquence à terre pour le contrôle de l'activation/désactivation du verrouillage des portes.

Il existe donc un besoin de fournir un système de transport par câble aérien équipé d'un moyen pour prévenir les accidents des véhicules en ligne.

## Objet de l'invention

L'objet de l'invention consiste à remédier aux inconvénients précités, et en particulier à fournir un système de transport par câble aérien équipé d'un moyen pour contrôler la position des véhicules lors de leur transport, et en particulier pour contrôler leur position lorsque les véhicules sont en ligne, afin d'éviter les collisions entre les véhicules.

Selon un aspect de l'invention, il est proposé un système de transport par câble aérien, notamment un télésiège ou télécabine, comprenant plusieurs véhicules couplés au câble aérien et décalés l'un de l'autre le long de la ligne du câble aérien.

Au moins un véhicule comporte :

- un émetteur radiofréquence destiné à émettre des signaux contenant au moins une information permettant de déterminer la position en ligne du véhicule ;

et le système comporte un dispositif de contrôle des positions en ligne des véhicules comprenant :

- au moins un récepteur radiofréquence destiné à recevoir les signaux émis par les émetteurs radiofréquences ; et
- une unité de traitement couplée à au moins un récepteur radiofréquence pour récupérer les informations contenues dans les signaux émis, l'unité de traitement comprenant un module de calcul pour déterminer la position en ligne d'au moins un véhicule à partir de l'information récupérée, et un module de comparaison pour comparer la position en ligne déterminée avec au moins une position de référence.

Ainsi, on fournit un dispositif efficace pour déterminer la position des véhicules lors de leur trajet et pour vérifier la cohérence de la position déterminée afin de pouvoir signaler une anomalie, et éventuellement déclencher un arrêt du câble aérien tracteur pour éviter les collisions. On peut avantageusement connaître en permanence la position en temps réel des véhicules lors de leur trajet.

Au moins un véhicule peut comporter un module d'acquisition configuré pour obtenir une information de la position en ligne du véhicule à partir d'un groupe de satellites, l'émetteur radiofréquence du véhicule étant couplé au module d'acquisition pour émettre des signaux contenant l'information de la position en ligne obtenue.

Au moins un véhicule peut comporter un module de datation configuré pour inclure une heure d'émission à chaque signal émis par l'émetteur radiofréquence du véhicule à partir d'une horloge interne du module de datation, et le module de calcul est configuré pour calculer une distance d'un véhicule à partir d'une différence entre une heure de réception d'un signal par un récepteur radiofréquence et l'heure d'émission du signal, et pour déterminer la position du véhicule à partir de la distance calculée.

Le module de calcul peut être configuré pour calculer une distance d'un véhicule à partir d'une puissance d'un signal reçu par un récepteur radiofréquence, et pour déterminer la position du véhicule à partir de la distance calculée.

L'ensemble comprenant les émetteurs et les récepteurs radiofréquences, peut former un réseau point-à-point.

Grâce au réseau point-à-point on fournit un dispositif de contrôle particulièrement simple à réaliser.

Le module de comparaison peut déterminer la position de référence d'un véhicule à partir d'une information de la vitesse du câble aérien, et d'une information d'une position initiale du véhicule.

Chaque véhicule peut comporter un identifiant, le système comporte un lecteur d'identifiant configuré pour transmettre une position de vérification à l'unité de traitement lorsque l'identifiant du véhicule est détecté par le lecteur d'identifiant, et le module de comparaison détermine la position de référence à partir de la position de vérification transmise.

Les émetteurs radiofréquences peuvent être configurés pour émettre les signaux périodiquement selon un intervalle de temps.

**Description sommaire du dessin**

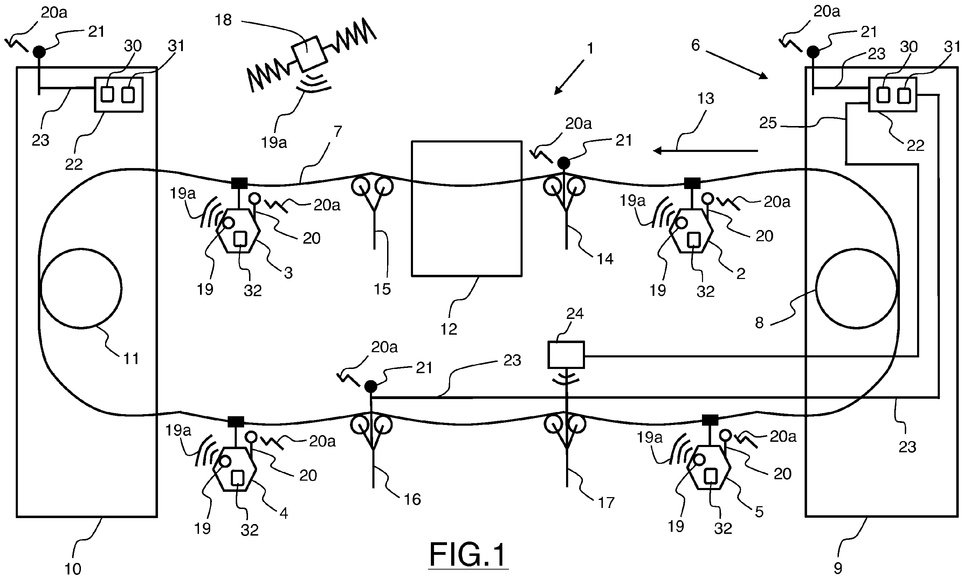

D'autres avantages et caractéristiques ressortiront plus clairement de la description qui va suivre de modes particuliers de réalisation de l'invention donnés à titre d'exemples non limitatifs et représentés au dessin annexé, dans lequel, la figure 1 illustre schématiquement un système de transport par câble aérien muni d'un dispositif de contrôle des positions des véhicules selon l'invention.

**Description détaillée**

Sur la figure 1, on a représenté un système de transport 1 par câble aérien 7, notamment un télésiège ou télécabine. Le système de transport 1 comporte plusieurs véhicules 2 à 5, une station d'embarquement 9 et une station de débarquement 10. Les véhicules 2 à 5 peuvent être ouverts, tels des sièges, ou fermés, telles des cabines. De façon générale, le câble aérien 7 est un câble tracteur auquel sont attachés les véhicules 2 à 5, de manière permanente lorsque le système est non débrayable, ou de manière amovible sinon. Le câble aérien 7 est entraîné par une poulie motrice 8 logée dans la station d'embarquement 9 et mise en mouvement par un moteur d'entraînement non représenté à des fins de simplification. Les véhicules 2 à 5 sont transportés par le câble aérien tracteur 7, qui décrit un trajet selon une boucle fermée, depuis la station d'embarquement 9 vers la station de débarquement 10 et inversement. Lorsque les véhicules 2 à 5 sont en ligne, ils sont situés entre la station d'embarquement 9 et la station de débarquement 10, et plus particulièrement, ils sont couplés mécaniquement au câble aérien tracteur 7 et sont décalés l'un de l'autre le long de la ligne du câble aérien tracteur 7. La station de débarquement 10 comporte une poulie relais 11 sur laquelle repose le câble aérien 7 et qui permet, notamment, un mouvement du câble aérien 7 et sa mise en tension. Le système de transport 1 peut éventuellement comprendre une ou plusieurs stations intermédiaires 12. Sur la figure 1, les véhicules 2 à 5 se déplacent selon un sens de déplacement indiqué par une flèche ayant la référence 13. En outre, le système de transport peut comporter des pylônes 14 à 17, munis, chacun, d'un balancier pour guider le câble aérien 7. En variante, le système de transport 1 ne comporte aucun pylône.

De manière générale, au moins un véhicule 2 à 5 comporte un émetteur radiofréquence 20 destiné à émettre des signaux 20a contenant au moins une information permettant de déterminer la position en ligne du véhicule 2 à 5. Les émetteurs radiofréquences 20 sont particulièrement adaptés pour des véhicules 2 à 5 montés amovible sur le câble aérien 7, et destinés à être détachés du câble aérien 7 en station d'embarquement 9 ou de débarquement 10. De préférence, plusieurs véhicules 2 à 5 comportent, chacun, un émetteur radiofréquence 20. Par exemple, chaque véhicule 2 à 5 du système de transport 1 comporte un émetteur radiofréquence 20. Les informations contenues dans les signaux émis 20a peuvent être, par exemple, la position du véhicule, la puissance du signal, ou l'heure d'émission du signal, ou encore une combinaison des trois informations. Plus particulièrement, l'émetteur radiofréquence 20 peut émettre les signaux 20a périodiquement selon un intervalle de temps, afin de diminuer la consommation d'énergie. L'intervalle de temps peut être compris entre 1 et 5 secondes. L'émission des signaux 20a peut également être effectuée de manière synchrone ou asynchrone.

Le système de transport 1 comporte en outre, un dispositif de contrôle 6 des positions en ligne des véhicules 2 à 5. Le dispositif de contrôle 6 comporte au moins un récepteur radiofréquence 21 et au moins une unité de traitement 22. Le dispositif de contrôle 6 peut comprendre un ou plusieurs récepteurs radiofréquences 21. Les récepteurs radiofréquences 21 sont destinés à recevoir les signaux émis 20a par les émetteurs radiofréquences 20. De façon générale, les récepteurs 21 sont couplés à l'unité de traitement 22, c'est-à-dire qu'ils peuvent transmettre les signaux reçus à l'unité de traitement 23. Par exemple, certains récepteurs 21 sont couplés directement à l'unité de traitement 22, par une connexion 23 filaire ou non, et transmettent directement les signaux reçus à l'unité de traitement 22. En variante, certains récepteurs 21 peuvent être couplés directement à d'autres récepteurs qui ont un rôle de relais pour transmettre les signaux reçus à l'unité de traitement 22. Plus particulièrement, dès qu'un récepteur 21 reçoit un signal émis 20a par un véhicule 2 à 5, le récepteur 21 transmet le signal reçu, soit directement à l'unité de traitement 22, via la connexion 23, soit directement à un autre récepteur relais. Par exemple, comme illustré sur la figure 1, certains récepteurs radiofréquences 21, tels que les récepteurs 21 situés dans les stations d'embarquement 9 et de débarquement 10 et sur le troisième pylône 16, sont reliés électriquement par des liaisons filaires 23 à une unité de traitement 22. En variante, d'autres récepteurs, tel que le récepteur 21 situé sur le premier pylône 14, peuvent être reliés à une unité de traitement 22 par une liaison sans fil, par exemple une liaison par ondes radios. De préférence, les récepteurs de signaux 21 sont situés sur des ouvrages fixes, comme les stations de débarquement 9, d'embarquement 10, ou intermédiaire 12, ou encore sur les pylônes 14 à 17. De préférence, lorsque les récepteurs 21 sont situés sur des ouvrages fixes, ils sont couplés à l'unité de traitement 22 par une connexion 23 du type filaire. Selon une autre variante, certains véhicules, ou tous les véhicules, peuvent comporter chacun un récepteur radiofréquence 21 couplé à l'unité de traitement 22 par une liaison 23 sans fil.

Les émetteurs et récepteurs radiofréquences 20, 21 ont une zone de communication commune, dans laquelle les signaux émis 20a par un émetteur 20 sont reçus par un récepteur 21. La transmission des signaux, émis par un véhicule 2 à 5, d'un récepteur 21 vers l'unité de traitement 22 est effectuée dès que le véhicule est situé dans la zone de communication entre l'émetteur 20 du véhicule et le récepteur 21. L'ensemble comprenant les émetteurs et les récepteurs radiofréquences 20, 21, forme un réseau point-à-point, c'est-à-dire un réseau dans lequel il n'y a qu'un canal de communication entre un émetteur 20 d'un véhicule 2 à 5 et un seul récepteur 21. Un tel réseau point-à-point est particulièrement simple à mettre en œuvre.

L'unité de traitement 22 peut être une unité de commande électronique, tel un microprocesseur au sein d'un ordinateur, ou un automate programmable. Le dispositif de contrôle 6 peut aussi comprendre plusieurs unités de traitement 22. Chaque unité de traitement 22 est couplée à au moins un récepteur radiofréquence 21 afin de recevoir les signaux émis 20a par les émetteurs radiofréquences 20 des différents véhicules 2 à 5. En outre, chaque unité de traitement 22 est configurée pour récupérer les informations contenues dans les signaux émis 20a. Chaque unité de traitement 22 comporte un module de calcul 30 et un module de comparaison 31. Le module de calcul 30 détermine la position en ligne d'au moins un véhicule à partir de l'information récupérée par l'unité de traitement 22. Le module de comparaison 31 compare la position en ligne déterminée avec au moins une position de référence. Ainsi, on vérifie la cohérence de la position d'un véhicule déterminée par rapport à une position de référence que le véhicule est sensé occuper en mode de fonctionnement normal.

L'unité de traitement 22 est en outre configurée pour générer un signal d'alerte lorsqu'au moins une position déterminée d'un véhicule est différente d'une position de référence associée au véhicule. Par exemple, l'unité de traitement 22 peut être couplée à un autre automate programmable du système de transport 1 qui arrête l'entraînement du câble aérien 7 si la différence de position est supérieure à un seuil d'arrêt d'urgence. L'automate programmable du système de transport 1 peut encore afficher le signal d'alerte reçu depuis l'unité de traitement 22. Par exemple, le module de comparaison 31 peut déterminer la position de référence d'un véhicule à partir d'une information de la vitesse du câble aérien 7 et d'une information d'une position initiale du véhicule 2 à 5. L'information de position initiale du véhicule 2 à 5 peut être, par exemple, la sortie de la station d'embarquement 9. A chaque détermination d'une position en ligne d'un véhicule 2 à 5 par le module de calcul 30, le module de comparaison détermine à nouveau la position de référence du véhicule 2 à 5. En variante, lorsque l'unité de traitement 22 a déterminé la position de chaque véhicule en ligne, le module de comparaison 31 calcule les distances entre les véhicules en ligne, et compare chaque distance calculée avec une distance de sécurité afin de savoir si un véhicule s'écarte de sa position sur le câble 7. Lorsqu'une distance calculée est inférieure à la distance de sécurité, l'unité de traitement 22 génère un signal d'alerte. Ainsi, on peut contrôler la position en ligne des véhicules 2 à 5.

Selon un mode de réalisation préférentiel, au moins un véhicule 2 à 5 comporte un module d'acquisition de position 19. Le module d'acquisition de position 19 est configuré pour obtenir, à partir d'un groupe de satellites 18, une information de la position du véhicule sur lequel il est situé. En particulier, le groupe de satellites 18 comporte au moins trois satellites pour donner une position d'un véhicule par triangulation. Le module d'acquisition 19 peut émettre et recevoir des signaux 19a du type radio avec le groupe satellite 18, afin de récupérer l'information de position du véhicule. De manière générale, le module d'acquisition 19 est un module du type géolocalisation. Par exemple, le module d'acquisition 19 comporte un système de positionnement global, ou « global positionning system » en langue anglaise. En outre, l'émetteur radiofréquence 20 du véhicule est couplé au module d'acquisition 19 de manière à émettre des signaux 20a qui contiennent au moins l'information de la position en ligne du véhicule obtenue. En outre, le véhicule 2 à 5 comporte une unité de stockage d'énergie, non représentée à des fins de simplification, reliée au module d'acquisition 19 et à l'émetteur 20. Par exemple, l'émetteur radiofréquence 20 comprend un microprocesseur, couplé au module d'acquisition 19, pour gérer les signaux provenant du module d'acquisition 19 et pour émettre les signaux 20a contenant l'information de position du véhicule. De préférence, chaque véhicule 2 à 5 comporte un module d'acquisition de position 19, un émetteur radiofréquence 20, et une unité de stockage d'énergie. Dans ce mode de réalisation, le module de calcul 30 détermine les positions des véhicules en ligne à partir respectivement des informations de position obtenues récupérées par l'unité de traitement 22.

Selon un autre mode de réalisation, au moins un véhicule 2 à 5 comporte un module de datation 32 configuré pour inclure une heure d'émission, et éventuellement une date, à chaque signal émis 20a par l'émetteur 20 du véhicule. En particulier, l'heure d'émission est incluse dans chaque signal à partir d'une horloge interne du module de datation 32. L'heure d'émission incluse dans un signal correspond à l'heure d'émission du signal par l'émetteur 20. Ainsi, les signaux émis 20a sont dits « horodatés », c'est-à-dire qu'ils contiennent une information de date et d'heure. Dans ce mode de réalisation, le module de calcul 30 calcule une distance d'un véhicule à partir d'une différence entre une heure de réception d'un signal par un récepteur 21 et l'heure d'émission contenue dans le signal. Par exemple, l'heure de réception d'un signal par un récepteur 21 est fournie par une horloge interne du récepteur 21. Plus particulièrement, la distance du véhicule est calculée à partir de la différence d'heure calculée et de la vitesse de transmission des signaux entre un émetteur 20 et un récepteur 21. Par exemple, la distance du véhicule est calculée selon l'équation suivante :

$$Dcal = Vs \bullet Dt$$

avec :

- Dcal : la distance du véhicule calculée ;
- Vs : la vitesse de transmission des signaux entre un émetteur 20 et un récepteur 21 ; et
- Dt : la différence entre l'heure de réception d'un signal par un récepteur 21 et l'heure d'émission contenue dans le signal.

La distance calculée Dcal correspond à la distance entre l'émetteur 20 du véhicule et le récepteur radiofréquence 21 qui reçoit le signal émis 20a par l'émetteur 20. Le module de calcul 20 détermine la position du véhicule à partir de la distance calculée, et en particulier à partir de la position fixe du récepteur 21.

Selon encore un autre mode de réalisation, le module de calcul 30 est configuré pour calculer une distance supplémentaire d'un véhicule à partir d'une puissance d'un signal reçu par un récepteur radiofréquence 21. En outre, la puissance du signal reçu par le récepteur 21 est inversement proportionnelle à la distance entre le récepteur 21 et l'émetteur 20 du véhicule. La distance supplémentaire calculée correspond, comme à la distance Dcal précédemment calculée, à la distance entre l'émetteur 20 du véhicule et le récepteur radiofréquence 21 qui reçoit le signal émis 20a par l'émetteur 20. Le module de calcul 20 détermine la position du véhicule à partir de la distance supplémentaire calculée, et en particulier à partir de la position fixe du récepteur 21.

En variante, les véhicules peuvent à la fois comprendre, chacun, un module d'acquisition 19 et un module de datation 32 afin d'émettre, par l'émetteur 20 du véhicule, des signaux contenant l'information de position obtenue par satellite et l'heure d'émission du signal. En tout état de cause chaque signal émis par l'émetteur 20 d'un véhicule est émis avec une puissance d'émission caractéristique de l'émetteur 20. Avantageusement, l'émetteur radiofréquence 20 émet des signaux 20a contenant une information d'identification du véhicule pour permettre à l'unité de traitement 22 d'identifier le véhicule qui a émis le signal. Un signal émis 20a par un émetteur radiofréquence 20 comporte au moins une information de puissance, et peut en outre comprendre l'information de position obtenue à partir de satellites et/ou l'information de l'heure d'émission du signal. L'unité de traitement 22 est également configurée pour déterminer la position en ligne du véhicule à partir d'au moins une information parmi les informations de puissance, de position ou de date et d'heure contenues dans les signaux reçus des véhicules. L'unité de traitement 22 peut également déterminer la position en ligne du véhicule à partir d'une combinaison des informations récupérées afin d'affiner la détermination de la position du véhicule.

Par ailleurs, chaque véhicule comporte une unité de stockage d'énergie afin d'alimenter le module d'acquisition 19, le module de datation 32 et l'émetteur radiofréquence 20 du véhicule.

Afin d'améliorer la vérification de la cohérence des positions des véhicules 2 à 5, au moins un véhicule comporte un identifiant, par exemple une étiquette d'identification par radiofréquence configurée pour recevoir un signal émis par un appareil radiofréquence, et pour émettre un signal de position. De préférence, chaque véhicule 2 à 5 comporte un identifiant. En outre, le dispositif de contrôle 6 comporte un lecteur d'identifiant 24 situé, de préférence, sur un ouvrage fixe, par exemple le quatrième pylône 17 comme illustré sur la figure 1. Le lecteur d'identifiant 24 est couplé à l'unité de traitement 22 par une connexion 25, et est configuré pour transmettre une position de vérification à l'unité de traitement 22 lorsque l'identifiant d'un véhicule 2 à 5 est détecté par le lecteur d'identifiant 24. Par exemple, le lecteur d'identifiant 24 peut être un appareil d'identification du type radiofréquence qui reçoit les signaux de position émis par les étiquettes d'identification des véhicules. Le module de comparaison 31 peut également comparer la position déterminée de chaque véhicule avec la position de vérification lorsque le véhicule est situé dans la zone de détection du lecteur d'identifiant 24. Ce qui permet de vérifier le bon fonctionnement du dispositif de contrôle 6 de la position des véhicules de manière simple et efficace.

Le système qui vient d'être décrit est particulièrement adapté à des téléphériques débrayables de façon à garantir un haut débit des personnes tout en empêchant les risques de collision en ligne.

## Revendications

1. Système de transport par câble aérien, notamment un télésiège ou télécabine, comprenant plusieurs véhicules (2 à 5) couplés au câble aérien et décalés l'un de l'autre le long de la ligne du câble aérien, au moins un véhicule (2 à 5) comportant :

   - un émetteur radiofréquence (20) destiné à émettre des signaux contenant au moins une information ;

   et le système comportant un dispositif de contrôle (6) des positions en ligne des véhicules (2 à 5) comprenant :

   - au moins un récepteur radiofréquence (21) destiné à recevoir les signaux émis par les émetteurs radiofréquences (20), et
   - une unité de traitement (22) couplée à au moins un récepteur radiofréquence (21) pour récupérer les informations contenues dans les signaux émis,

   **caractérisé en ce que** l'au moins une information transmise par l'émetteur radiofréquence permet de déterminer la position en ligne du véhicule et **en ce que** l'unité de traitement (22) comprend un module de calcul (30) configuré pour déterminer la position en ligne d'au moins un véhicule à partir de l'au moins une information récupérée, et un module de comparaison (31) configuré pour comparer la position en ligne déterminée avec au moins une position de référence.

2. Système selon la revendication 1, dans lequel au moins un véhicule comporte un module d'acquisition (19) configuré pour obtenir une information de la position en ligne du véhicule à partir d'un groupe de satellites (18), l'émetteur radiofréquence (20) du véhicule étant couplé au module d'acquisition (19) pour émettre des signaux contenant l'information de la position en ligne obtenue.

3. Système selon la revendication 1 ou 2, dans lequel au moins un véhicule comporte un module de datation (32) configuré pour inclure une heure d'émission à chaque signal émis par l'émetteur radiofréquence (20) du véhicule à partir d'une horloge interne du module de datation (32), et le module de calcul (30) est configuré pour calculer une distance d'un véhicule à partir d'une différence entre une heure de réception d'un signal par un récepteur radiofréquence (21) et l'heure d'émission du signal, et pour déterminer la position du véhicule à partir de la distance calculée.

4. Système selon l'une des revendications 1 ou 2, dans lequel le module de calcul (30) est configuré pour calculer une distance d'un véhicule à partir d'une puissance d'un signal reçu par un récepteur radiofréquence (21), et pour déterminer la position du véhicule à partir de la distance calculée.

5. Système selon la revendication 1 à 4, dans lequel l'ensemble comprenant les émetteurs et les récepteurs radiofréquences (20, 21), forme un réseau point-à-point.

6. Système selon l'une des revendications 1 à 4, dans lequel le module de comparaison (31) détermine la position de référence d'un véhicule (2 à 5) à partir d'une information de la vitesse du câble aérien (7), et d'une information d'une position initiale du véhicule.

7. Système selon l'une des revendications 1 à 6, dans lequel chaque véhicule (2 à 5) comporte un identifiant, le système comporte un lecteur d'identifiant (24) configuré pour transmettre une position de vérification à l'unité de traitement (22) lorsque l'identifiant du véhicule est détecté par le lecteur d'identifiant (24), et le module de comparaison (31) détermine la position de référence à partir de la position de vérification transmise.

8. Système selon l'une des revendications 1 à 7, dans lequel, les émetteurs radiofréquences (20) sont configurés pour émettre les signaux périodiquement selon un intervalle de temps.

## Patentansprüche

1. Luftkabeltransportsystem, insbesondere ein Sessellift oder eine Gondelbahn, umfassend mehrere Fahrzeuge (2 bis 5), die mit dem Luftkabel gekoppelt sind und reihenförmig entlang des Verlaufes des Luftkabels verteilt angeordnet sind, wobei mindestens ein Fahrzeug (2 bis 5) aufweist:

   - einen Funkfrequenzsender (20), der dazu bestimmt ist, Signale zu senden, die mindestens eine Information enthalten;

   und wobei das System eine Überwachungseinrichtung (6) für die Positionen in der Reihe der Fahrzeuge (2 bis 5) aufweist, umfassend:

   - mindestens einen Funkfrequenzempfänger (21), der dazu bestimmt ist, die von den Funkfrequenzsendern (20) gesendeten Signale zu empfangen, sowie

- eine Verarbeitungseinheit (22), die mit dem mindestens einen Funkfrequenzempfänger (21) gekoppelt ist, um die in den gesendeten Signalen enthaltenen Informationen auszulesen,

**dadurch gekennzeichnet, dass** es die mindestens eine vom Funkfrequenzsender übertragene Information ermöglicht, die Position des Fahrzeugs in der Reihe zu bestimmen, und die Verarbeitungseinheit (22) ein Rechenmodul (30) umfasst, das dazu ausgelegt ist, um die Position mindestens eines Fahrzeugs in der Reihe aus der mindestens einen ausgelesenen Information zu bestimmen, sowie ein Vergleichsmodul (31), das dazu ausgelegt ist, um die Position in der Reihe mit mindestens einer Referenzposition zu vergleichen.

2. System nach Anspruch 1, wobei mindestens ein Fahrzeug ein Erfassungsmodul (19) umfasst, das dazu ausgelegt ist, um eine Information über die Position des Fahrzeugs in der Reihe von einer Gruppe von Satelliten (18) zu erhalten, wobei der Funkfrequenzsender (20) des Fahrzeugs mit dem Erfassungsmodul (19) gekoppelt ist, um Signale zu senden, welche die erhaltene Information über die Position in der Reihe enthalten.

3. System nach Anspruch 1 oder 2, wobei mindestens ein Fahrzeug ein Datierungsmodul (32) aufweist, das dazu ausgelegt ist, um bei jedem vom Funkfrequenzsender (20) des Fahrzeugs gesendeten Signal einen Sendezeitpunkt von einem internen Zeitgeber des Datierungsmoduls (32) hinzuzufügen, und wobei das Rechenmodul (30) dazu ausgelegt ist, um eine Distanz eines Fahrzeugs aus einer Differenz zwischen einer Empfangszeit eines Signals durch einen Funkfrequenzempfänger (21) und dem Sendezeitpunkt des Signals zu berechnen, und um die Position des Fahrzeugs aus der berechneten Distanz zu bestimmen.

4. System nach einem der Ansprüche 1 oder 2, wobei das Rechenmodul (30) dazu ausgelegt ist, um eine Distanz eines Fahrzeugs aus einer Leistung eines Signals zu berechnen, das von einem Funkfrequenzempfänger (21) empfangen wird, und um die Position des Fahrzeugs aus der berechneten Distanz zu bestimmen.

5. System nach Anspruch 1 bis 4, wobei die Anordnung, welche die Funkfrequenzsender und -empfänger (20, 21) umfasst, ein Punkt-zu-Punkt-Netz bildet.

6. System nach einem der Ansprüche 1 bis 4, wobei das Vergleichsmodul (31) die Referenzposition eines Fahrzeugs (2 bis 5) aus einer Information der Geschwindigkeit des Luftkabels (7) und aus einer Information einer Ausgangsposition des Fahrzeugs bestimmt.

7. System nach einem der Ansprüche 1 bis 6, wobei jedes Fahrzeug (2 bis 5) einen Identifikator umfasst, und das System einen Identifikatorleser (24) umfasst, der dazu ausgelegt ist, um eine Verifikationsposition an die Verarbeitungseinheit (22) zu übertragen, wenn der Identifikator des Fahrzeugs von dem Identifikatorleser (24) detektiert wird, und wobei das Vergleichsmodul (31) die Referenzposition aus der übertragenen Verifikationsposition bestimmt.

8. System nach einem der Ansprüche 1 bis 7, wobei die Funkfrequenzsender (20) dazu ausgelegt sind, die Signale periodisch in einem Zeitintervall zu senden.

## Claims

1. Aerial cable transport system, in particular a chair lift or gondola lift, comprising several vehicles (2 to 5) coupled to the aerial cable and separated apart from one another along the line of the aerial cable, at least one vehicle (2 to 5) comprising:

   - a radiofrequency transmitter (20) designed to transmit signals containing at least one information;

   and the system comprising a monitoring device (6) of the on-line positions of the vehicles (2 to 5) comprising:

   - at least one radiofrequency receiver (21) designed to receive the signals transmitted by the radiofrequency transmitters (20); and
   - a processing unit (22) coupled to at least one radiofrequency receiver (21) to retrieve the information contained in the transmitted signals,

   **characterized in that** said at least one information transmitted by the radiofrequency transmitter enables the on-line position of the vehicle to be determined and **in that** the processing unit (22) comprises a computing module (30) configured to determine the on-line position of at least one vehicle from said at least one information retrieved, and a comparison module (31) configured to compare the determined on-line position with at least one reference position.

2. System according to claim 1, wherein at least one vehicle comprises an acquisition module (19) configured to obtain information on the on-line position of the vehicle from a group of satellites (18), the radiofrequency transmitter (20) of the vehicle being coupled to the acquisition module (19) to transmit signals containing the obtained on-line position information.

3. System according to claim 1 or 2, wherein at least one vehicle comprises a time-stamping module (32) configured to include a transmission time on each signal transmitted by the radiofrequency transmitter (20) of the vehicle from an internal clock of the time-stamping module (32), and the computing module (30) is configured to compute a distance of a vehicle from a difference between a receipt time of a signal by a radiofrequency receiver (21) and the transmission time of the signal, and to determine the position of the vehicle from the computed distance.

4. System according to claim 1 or 2, wherein the computing module (30) is configured to compute a distance of a vehicle from a power of a signal received by a radiofrequency receiver (21), and to determine the position of the vehicle from the computed distance.

5. System according to one of claims 1 to 4, wherein the assembly comprising the radiofrequency transmitters and receivers (20, 21) forms a point-to-point network.

6. System according to one of claims 1 to 4, wherein the comparison module (31) determines the reference position of a vehicle (2 to 5) from information of the speed of the aerial cable (7) and from information of an initial position of the vehicle.

7. System according to one of claims 1 to 6, wherein each vehicle (2 to 5) comprises an identifier, the system comprises an identifier reader (24) configured to transmit a checking position to the processing unit (22) when the identifier of the vehicle is detected by the identifier reader (24), and the comparison module (31) determines the reference position from the transmitted checking position.

8. System according to one of claims 1 to 7, wherein the radiofrequency transmitters (20) are configured to transmit the signals periodically according to a time interval.

## FIG.1

EP 3 077 265 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2941206

- EP 2067682 A1